# EUROPÄISCHE PATENTSCHRIFT

(11) **EP 0 983 913 B1**
(45) Veröffentlichungstag und Bekanntmachung des Hinweises auf die Patenterteilung: **10.05.2006**
(21) Anmeldenummer: 99116832.9
(22) Anmeldetag: 02.09.1999
(51) Int. Cl.: B60R 21/20, B60R 21/16

(54) **Luftsack und Luftsackbefestigung**
Airbag and airbag attachment
Coussin gonflable et fixation de coussin gonflable

(30) Priorität: 04.09.1998 DE 29815936 U
(43) Veröffentlichungstag der Anmeldung: 08.03.2000
(73) Patentinhaber: TRW Automotive Safety Systems GmbH, 63743 Aschaffenburg (DE)
(72) Erfinder: Bohn, Stefan, 63773 Goldbach (DE)
(74) Vertreter: Degwert, Hartmut

(56) Entgegenhaltungen:
- EP-A- 0 709 260
- EP-A- 0 834 429
- US-A- 5 613 700
- US-A- 5 642 900
- US-A- 5 664 805

## Beschreibung

Die Erfindung betrifft eine Luftsackbefestigung mit einem Luftsack für Airbag-Module, die in Fahrzeugen als Aufprallschutzvorrichtungen für Insassen angeordnet sind.

Derartige Aufprallschutzvorrichtungen dienen der Verbesserung der passiven Sicherheit von Kraftfahrzeugen, wobei nacheinander im Lenkrad untergebrachte Airbag-Module für den Fahrer, in der Instrumententafel untergebrachte Airbag-Module für den Beifahrer sowie in den Türen bzw. Sitzen untergebrachte Seiten-Airbags serienmäßig eingeführt wurden und bei fast allen modernen Fahrzeugmodellen zur Grundausstattung gehören. Es werden pro Fahrzeug also eins bis vier oder gar mehr Airbag-Module benötigt, so daß die Fertigungsstückzahlen der Airbag-Module wesentlich höher liegen, als die Stückzahlen der gefertigten Kraftfahrzeuge. Es ist daher verständlich, daß man sehr darum bemüht ist, die Airbag-Module hinsichtlich Fertigungsaufwand, Gewicht, Entsorgung, Montageaufwand, u.s.w. zu verbessern.

Bei vielen, in großen Stückzahlen hergestellten Airbag-Modulen besteht der Luftsack aus zwei kreisförmigen Materialzuschnitten, die randseitig miteinander verbunden sind und von denen einer eine zentrale Eintrittsöffnung für die Füllgase aufweist, deren Rand üblicherweise zwischen einem Luftsackhalteblech und einem Trägerbauteil des Airbag-Moduls eingeklemmt ist. Diese Art der Luftsackbefestigung hat sich bewährt, ist aber verhältnismäßig aufwendig. Das Luftsackhalteblech muß durch die Eintrittsöffnung eingebracht und dann relativ zur Eintrittsöffnung im Luftsack festgelegt werden. Es darf keine scharfen Kanten aufweisen, damit das Gewebe bei einer Aktivierung des Luftsacks nicht einreißt. Außerdem muß die Klemmwirkung rund um die Eintrittsöffnung überall ein gewisses Mindestmaß aufweisen, damit das Gewebe bei der Aktivierung des Luftsacks nicht stellenweise herausrutschen kann, wodurch die Funktion des Luftsacks beeinträchtigt würde. Zur Erzielung einer ausreichenden Klemmwirkung muß der Klemmbereich eine bestimmte Breite aufweisen, womit Einschränkungen hinsichtlich der Einbau- und Faltmöglichkeiten des Luftsacks verbunden sind.

US 5,642,900 offenbart eine gattungsgemäße Luftsacksefestigung und ein Airbag-Modul mit einem Gassack, der aus zwei Stoffteilen zusammengenäht ist. Eines der Stoffteile weist eine kreisförmige Öffnung auf, durch die Gas in den Gassack einströmen kann. Bei der Herstellung wird diese runde Öffnung erreicht, indem der Stoff kreuzweise eingeschnitten wird. Die dabei entstehenden Dreiecke werden jeweils mit einem Halteloch versehen und zur Befestigung des Gassacks an einer Grundplatte verwendet. Dazu weist die rechtwinkelige Grundplatte vier Bolzen auf, über die die Haltelöcher gesteckt werden. An diesen Bolzen wird außerdem der Gasgenerator mittels Blechlaschen befestigt.

US 5,664,805 offenbart einen Luftsack für ein Airbag-Modul, der wahlweise aus zwei Stoffteilen zusammengenäht wird oder aus einem Stoffteil, das zwei zu einer Faltlinie symmetrisch angeordnete Hauptteile besitzt. In beiden Fällen ist der Luftsack an seiner Gaseintrittsöffnung mit Laschen versehen. Diese Laschen weisen Löcher auf, durch die Bolzen geführt werden können. Damit ist eine Befestigung des Luftsacks am Airbag-Modul möglich.

Der Erfindung liegt die Aufgabe zugrunde, die vorgenannten Nachteile der Luftsackbefestigung zu überwinden und andere Befestigungsmöglichkeiten zu realisieren, ohne daß die Herstellung des Luftsacks dadurch verteuert wird.

Zur Lösung dieser Aufgabe wird eine Luftsackbefestigung mit einem Luftsack für Airbag-Module mit den Merkmalen des Anspruchs 1 oder des Anspruchs 2 vorgeschlagen.

Dem liegt die Erwägung zugrunde, daß man von der üblichen Einklemmung des Randes der Eintrittsöffnung abgehen kann, wenn man den Materialzuschnitt mit einer oder mehreren Laschen versieht, die dann zur Festlegung des Luftsacks im Airbag-Modul dienen. Derartige Laschen können einteilig mit dem Materialzuschnitt für die Herstellung des Luftsacks ausgebildet oder aber gesondert zugeschnitten und mit dem Materialzuschnitt für den Luftsack verbunden werden. Dabei wird das Gewebematerial, aus dem der Luftsack besteht, auf Zug beansprucht, wodurch man die erforderlichen Haltekräfte wesentlich besser beherrscht, als bei einer Klemmverbindung, die wegen der unvermeidbaren Fertigungstoleranzen aus Sicherheitsgründen stets überdimensioniert ausgeführt werden muß. Außerdem läßt sich die Luftsackbefestigung mittels Laschen auch konstruktiv leichter realisieren.

Vorteilhafte Ausgestaltungen sind in den Unteransprüchen 3 bis 6 beschrieben. Weitere Einzelheiten werden in den Figuren 1 bis 5 dargestellt. Es zeigen:
- Figur 1 einen Ausschnitt aus einem Materialzuschnitt mit zentraler Eintrittsöffnung;
- Figur 2 einen einstückigen Materialzuschnitt mit Faltlinie;
- Figur 3 eine Luftsackbefestigung im Schnitt;
- Figur 4 die Luftsackbefestigung gemäß Figur 3 als Abwicklung; und
- Figur 5 eine Luftsackbefestigung unter Einbeziehung der Abdeckkappe.

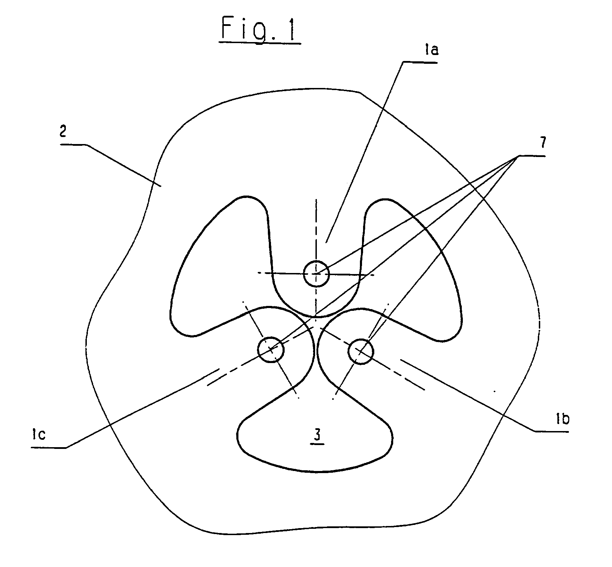

Bei dem in Figur 1 ausschnittweise dargestellten Materialzuschnitt 2 mit zentraler Eintrittsöffnung 3 sind drei radial nach innen weisende Laschen 1 dargestellt, die aus Materialstreifen 1a, b, c bestehen und einstückig mit dem Rand der Eintrittsöffnung 3 verbunden sind. Für den Fall, daß die Größe der Eintrittsöffnung 3 keine ausreichend langen Laschen 1 zuläßt, können letztere durch angenähte oder angeklebte Materialstreifen verlängert werden. Die Laschen 1a, b, c sind mit Haltelöchern 7 versehen, deren Funktion später erläutert wird.

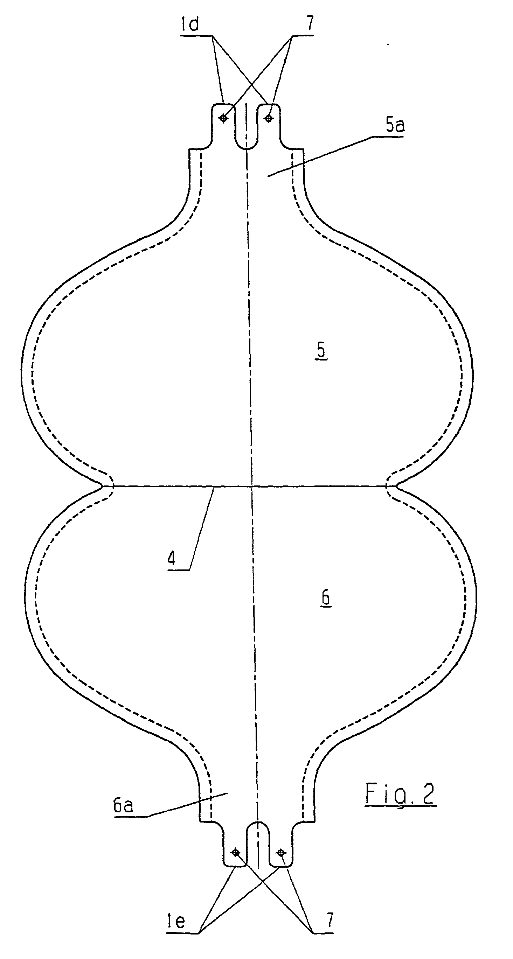

Fig. 2 zeigt einen Materialzuschnitt, der zwei zu einer Faltlinie 4 symmetrisch angeordnete Hauptteile 5, 6 mit halsförmigen Ansätzen 5a, 6a aufweist, an denen einstückig je zwei Laschen 1e und 1d angeformt sind. Ein daraus hergestellter Luftsack besitzt einen schlauchartigen Ansatz, der aus den Teilen 5a, 6a gebildet wird und über einen rohrförmigen Ansatz des Gasgenerators für die Befüllung des Luftsacks geschoben und mittels einer Schlauchklemme oder dergl. klemmend befestigt werden kann. Eine derartige Klemmbefestigung muß jedoch nicht die Haltekräfte bei der Aktivierung des Luftsacks aufnehmen, weil diese über die Laschen 1e, 1d auf ein Trägerbauteil übertragen werden können, wobei die Haltelöcher 7 auf Stifte oder dergl. des Trägerbauteils aufgeschoben sind.

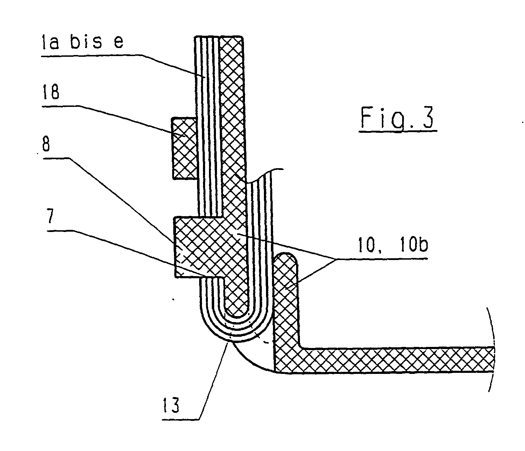

Aus Fig. 3 ist ersichtlich, wie die Laschen 1a bis 1e um die hintere bzw. untere Kante 13 eines Trägerbauteils 10 umlegbar sind. Die die Haltelöcher 7 aufweisenden Enden werden dabei um 180° umgeklappt und mittels ihrer Haltelöcher 7 an außen am Trägerbauteil 10 angebrachten Haltestiften 8 oder dergl. festgelegt. Die Breite der Laschen kann an die auftretenden Haltekräfte angepaßt werden und die Umlegung um 180° bewirkt, daß ein Teil der Haltekräfte über Reibung aufgenommen wird. Das Ende der Laschen kann in Taschen 18 eingeschoben werden, die am Trägerbauteil 10 oder am Seitenwandbereich 14 der Abdeckkappe 11 ausgebildet sind.

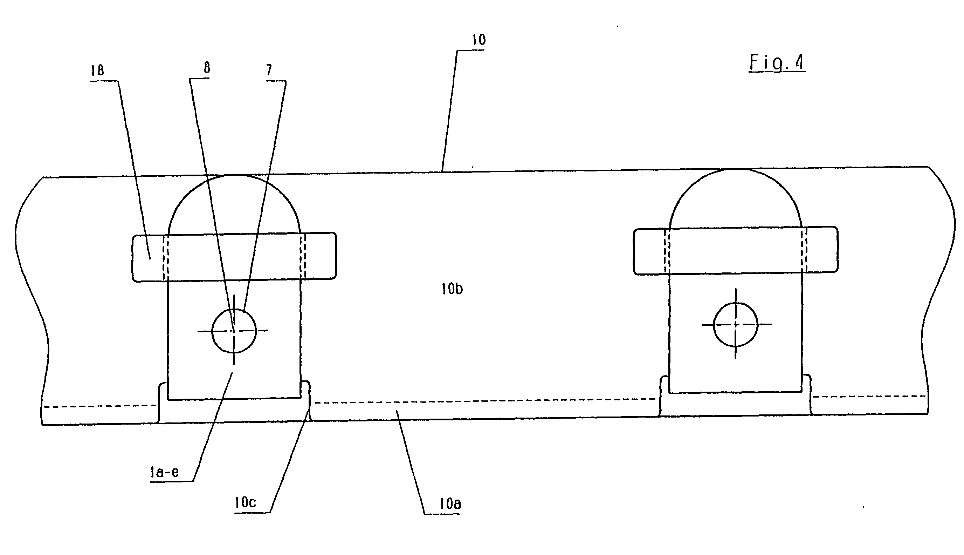

Fig. 4 zeigt die Luftsackbefestigung gemäß Fig. 3 als Ansicht auf einen abgewickelten Bereich des Trägerbauteils 10. Das Trägerbauteil 10 kann topfförmig mit einem Boden 10a und einer Seitenwand 10b ausgebildet sein, wobei lediglich dafür gesorgt werden muß, daß die Laschen 1a bis 1e um die Kante 13 umlegbar und um 180° nach vorne bzw. oben umklappbar ist. Dazu sind im dargestellten Ausführungsbeispiel zwischen Boden 10a und Seitenwand 10b Ausnehmungen 10c vorgesehen, durch die die Laschen 1a bis 1e hindurchgeführt und mit ihren die Haltelöcher 7 aufweisenden Enden an den Haltestiften 8 festgelegt werden können.

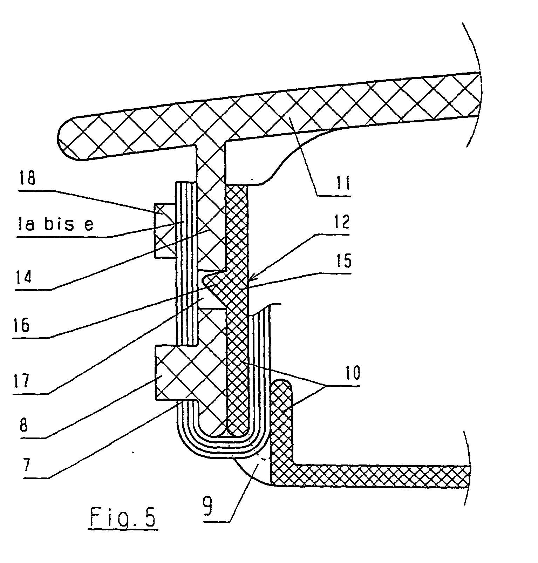

Fig. 5 zeigt eine besonders vorteilhafte Luftsackbefestigung unter Verwendung der erfindungsgemäßen Materialzuschnitte, wobei ein topfartiges Trägerbauteil 10 und eine deckelartige Abdeckkappe 11 vorgesehen sind, die in montiertem Zustand konzentrisch zueinander und einander berührende Seitenwandbereiche 14, 15 aufweisen. Zusammenwirkende Vorsprünge 16 und Ausnehmungen 17 in den Seitenwandbereichen 14, 15 wirken zusammen, um Trägerbauteil 10 und Abdeckkappe 11 relativ zueinander positionieren zu können. Die Vorsprünge 16 und Ausnehmungen 17 können außerdem so ausgebildet sein, daß sie eine zusätzlich formschlüssig wirkende Clipverbindung 12 bilden.

Durch eine Ausnehmung 9 des Trägerbauteils 10 sind die Laschen 1a bis 1e des Materialzuschnitts von oben nach unten hindurchgeführt, dann um 180° nach oben umgeklappt und mittels der Haltelöcher 7 auf die außen an der Seitenwand 14 der Abdeckkappe 11 angebrachten Haltestifte 8 aufgesteckt. Diese Art der Luftsackbefestigung ist deswegen so vorteilhaft, weil gleichzeitig die Abdeckkappe 11 mit befestigt werden kann und weil die erfindungsgemäß vorgesehenen Laschen 1a bis 1e nicht nur die sonst erforderlichen Mittel zur Befestigung des Luftsacks am Trägerbauteil, sondern auch die sonst erforderlichen Mittel zur Befestigung der Abdeckkappe 11 am Trägerbauteil 10 ersetzen. Diese Art der Luftsackbefestigung weist außerdem einen sehr günstigen Kraftlinienverlauf auf, weil die vom Luftsack auf die Abdeckkappe 11 wirkenden Öffnungskräfte mittels der um 180° abgewinkelten Laschen 1a bis 1e direkt auf die Seitenwandbereiche 14 der Abdeckkappe 11 umgeleitet und damit kompensiert werden. Mit anderen Worten, die explosionsartig auftretenden, in Öffnungsrichtung wirkenden Kräfte bei der Aktivierung des Luftsacks werden dazu benutzt, die Abdeckkappe 11 am Trägerbauteil 10 festzuhalten. Es müssen keine sonstigen Befestigungsmittel zur Beherrschung der Haltekräfte vorgesehen werden. Auch hier kann selbstverständlich die Breite der Laschen auf die aufzunehmenden Haltekräfte abgestimmt werden, und es wird infolge der 180°-Umlenkung ein Teil der Haltekräfte durch Reibung aufgenommen.

## Patentansprüche

1. Luftsackbefestigung mit einem Luftsack für Airbag-Module, die in Fahrzeugen als Aufprallschutzvorrichtungen für Insassen angeordnet sind, wobei der Luftsack aus einem Materialzuschnitt gebildet ist, an dem wenigstens eine einstückig ausgebildete oder angebrachte Lasche (1), die mindestens ein Halteloch (7) aufweist, zur Befestigung des Luftsacks an einem Trägerbauteil (10) vorgesehen ist, wobei das Halteloch (7) an einem Haltestift (8) oder dergleichen festgelegt ist, **dadurch gekennzeichnet, daß** das Trägerbauteil (10) topfförmig mit einem Boden (10a) und einer Seitenwand (10b) ausgebildet ist und zwischen Boden (10a) und Seitenwand (10b) Ausnehmungen (10c) vorgesehen sind, wobei die wenigstens eine Lasche (1) durch die Ausnehmungen (10c) hindurchgeführt ist und um eine ― in Entfaltungsrichtung des Luftsacks gesehen ― hintere bzw. untere Kante (13) des Trägerbauteils (10) um 180° umgelegt und mittels des Haltelochs (7) an dem außen am Trägerbauteil (10) angebrachten Haltestift (8) oder dergleichen festgelegt ist.

2. Luftsackbefestigung mit einem Luftsack für Airbag-Module, die in Fahrzeugen als Aufprallschutzvorrichtung für Insassen angeordnet sind, wobei der Luftsack aus einem Materialzuschnitt gebildet ist, an dem wenigstens eine einstückig ausgebildete oder angebrachte Lasche (1), die mindestens ein Halteloch (7) aufweist, zur Befestigung des Luftsacks an einem Trägerbauteil (10) vorgesehen ist, wobei das Halteloch (7) an einem Haltestift (8) oder dergleichen festgelegt ist, **dadurch gekennzeichnet, daß** das Trägerbauteil (10) topfartig ausgebildet ist und eine deckelartige Abdeckkappe (11) vorgesehen ist, die in montiertem Zustand konzentrisch zueinander und einander berührende Seitenwandbereiche (14, 15) aufweisen und daß die wenigstens eine Lasche (1) durch Ausnehmung (9) des Trägerbauteils (10) nach hinten bzw. unten - in Entfaltungsrichtung des Luftsacks gesehen - hindurch geführt und dann nach vorne bzw. oben umgeklappt und mittels ihres Haltelochs (7) an dem Haltestift (8) oder dergleichen festgelegt ist, der außen an den Seitenwandbereichen (14) der Abdeckkappe (11) angebracht ist, so daß die Abdeckkappe (11) mittels der wenigstens einen Lasche (1) am Trägerbauteil (10) befestigt ist.

3. Luftsackbefestigung nach Anspruch 1 oder 2, **dadurch gekennzeichnet, daß** der Luftsack aus einem Materialzuschnitt gebildet ist, der aus zwei zu einer Faltlinie (4) symmetrisch angeordneten Hauptteilen (5, 6) besteht, wobei an den der Mitte der Faltlinie (4) gegenüberliegenden Rändern der Haupteile (5, 6) wenigstens je eine einstückig angeformte Lasche (1d, e) vorgesehen ist.

4. Luftsackbefestigung nach Anspruch 3, **dadurch gekennzeichnet, daß** je zwei Laschen (1d, 1e) vorgesehen sind, die sich bei ebener Anordnung des Materialzuschnitts zueinander beabstandet etwa senkrecht zur Faltlinie (4) erstrecken.

5. Luftsackbefestigung nach Anspruch 2, **dadurch gekennzeichnet, daß** die Seitenwandbereiche (14, 15) mittels Rippen und Nuten oder mittels zusammenwirkender Vorsprünge (16) und Ausnehmungen (17) relativ zueinander positioniert sind.

6. Luftsackbefestigung nach Anspruch 5, **dadurch gekennzeichnet, daß** die Vorsprünge (16) und Ausnehmungen (17) eine zusätzliche, formschlüssige Clipverbindung (12) bilden.

## Claims

1. An air bag attachment comprising an air bag for air bag modules which are arranged in vehicles as impact protection devices for occupants, the air bag being formed of a material blank having provided thereon at least one flap (1) for attaching the air bag to a carrier component (10), the flap (1) being integrally formed with or fitted to the blank and having at least one locating hole (7) that is fixed at a locating pin (8) or the like, **characterized in that** the carrier component (10) is configured to be cup-shaped and has a bottom (10a) and a side wall (10b), and recesses (10c) are provided between the bottom (10a) and the side wall (10b), the at least one flap (1) being passed through the recesses (10c) and being folded by 180° around a rear or lower edge (13) of the carrier component (10) ― as seen in the unfolding direction of the air bag ― and being fixed by means of the locating hole (7) to the locating pin (8) or the like which is fitted to the outside of the carrier component (10).

2. An air bag attachment comprising an air bag for air bag modules which are arranged in vehicles as impact protection devices for occupants, the air bag being formed of a material blank having provided thereon at least one flap (1) for attaching the air bag to a carrier component (10), the flap (1) being integrally formed with or fitted to the blank and having at least one locating hole (7) that is fixed at a locating pin (8) or the like, **characterized in that** the carrier component (10) is configured to be cup-like and a lid-type cover plate (11) is provided, which in the assembled condition have side wall areas (14, 15) concentric to each other and in contact with each other, and that the at least one flap (1) is passed through a recess (9) of the carrier component (10) towards the rear or downwards ― as seen in the unfolding direction of the air bag ― and is then folded towards the front or upwards and is fixed by means of its locating hole (7) to the locating pin (8) or the like which is fitted to the outside of the side wall areas (14) of the cover plate (11), so that the cover plate (11) is attached to the carrier component (10) by means of the at least one flap (1).

3. The air bag attachment according to claim 1 or 2, **characterized in that** the air bag is formed of a material blank consisting of two main parts (5, 6) arranged symmetrically to a folding line (4), at least one flap (1d, e) formed integrally with each main part being provided at the rims of the main parts (5, 6) opposite the center of the folding line (4).

4. The air bag attachment according to claim 3, **characterized in that** two pairs of flaps (1d, 1e) are provided which extend roughly perpendicularly to the folding line (4) at a distance from each other when the material blank is arranged to be flat.

5. The air bag attachment according to claim 2, **characterized in that** the side wall areas (14, 15) are positioned in relation to each other by means of ribs and grooves or by means of cooperating projections (16) and recesses (17).

6. The air bag attachment according to claim 5, **characterized in that** the projections (16) and the recesses (17) constitute an additional form-fitting clip connection (12).

## Revendications

1. Fixation de coussin gonflable, comportant un coussin gonflable pour des modules d'airbag qui sont agencés dans des véhicules en tant que dispositifs de protection d'impact pour des occupants, le coussin gonflable étant formé à partir d'une découpe de matériau sur laquelle au moins une patte (1) réalisée ou appliquée d'un seul tenant, laquelle présente au moins un trou de retenue (7), est prévue pour la fixation du coussin gonflable sur un composant porteur (10), le trou de retenue (7) étant immobilisé sur une goupille de fixation (8) ou similaire, **caractérisée en ce que** le composant porteur (10) est réalisé en forme de pot avec un fond (10a) et une paroi latérale (10b), et entre le fond (10a) et la paroi latérale (10b) sont prévus des évidements (10c), ladite au moins une patte (1) passant à travers les évidements (10c) et étant repliée de 180° autour d'une arête postérieure ou inférieure (13) du composant porteur (10), respectivement, - vu en direction de déploiement du coussin gonflable - et immobilisée sur la goupille de fixation (8) ou similaire montée à l'extérieur sur le composant porteur (10).

2. Fixation de coussin gonflable comportant un coussin gonflable pour des modules d'airbag qui sont agencés dans des véhicules en tant que dispositifs de protection d'impact pour des occupants, le coussin gonflable étant formé à partir d'une découpe de matériau sur laquelle au moins une patte (1) réalisée ou appliquée d'un seul tenant, laquelle présente au moins un trou de retenue (7), est prévue pour la fixation du coussin gonflable sur un composant porteur (10), le trou de retenue (7) étant immobilisé sur une goupille de fixation (8) ou similaire, **caractérisée en ce que** le composant porteur (10) est réalisé en forme de pot et il est prévu un capuchon (11) en forme de couvercle, éléments qui, à l'état monté, présentent des zones de parois latérales (14, 15) concentriques l'une par rapport à l'autre et se touchant mutuellement, et **en ce que** ladite au moins une patte (1) est passée à travers un évidement (9) du composant porteur (10) respectivement vers l'arrière ou vers le bas - vu en direction de déploiement du coussin gonflable - et est rabattue ensuite respectivement vers l'avant ou vers le haut et immobilisée au moyen de son trou de retenue (7) sur la goupille de fixation (8) ou similaire qui est montée à l'extérieur sur les zones de parois latérales (14) du capuchon (11), de telle sorte que le capuchon (11) est fixé sur le composant porteur (10) au moyen de ladite au moins une patte (1).

3. Fixation de coussin gonflable selon la revendication 1 ou 2, **caractérisée en ce que** le coussin gonflable est formé à partir d'une découpe de matériau qui est constituée par deux parties principales (5, 6) agencées symétriquement par rapport à une ligne de pliage (4), au moins une patte (1d, e) conformée d'un seul tenant étant prévue sur chacun des bords des parties principales (5, 6) qui sont opposés au milieu de la ligne de pliage (4).

4. Fixation de coussin gonflable selon la revendication 3, **caractérisée en ce qu'**il est prévu deux pattes (1d, e) respectives qui s'étendent à distance l'une de l'autre approximativement perpendiculairement à la ligne de pliage (4) lorsque l'agencement de la découpe de matériau est plan.

5. Fixation de coussin gonflable selon la revendication 2, **caractérisée en ce que** les zones de parois latérales (14, 15) sont positionnées relativement l'une à l'autre au moyen de nervures et de rainures ou au moyen de saillies (15) et d'évidements (17) coopérant les uns aux autres.

6. Fixation de coussin gonflable selon la revendication 5, **caractérisé en ce que** les saillies (16) et les évidements (17) forment une liaison par clip (12) additionnelle par coopération de formes.
